# EUROPÄISCHE PATENTSCHRIFT

(11) **EP 2 308 784 B1**
(45) Veröffentlichungstag und Bekanntmachung des Hinweises auf die Patenterteilung: **21.01.2015**
(21) Anmeldenummer: 10013297.6
(22) Anmeldetag: 05.10.2010
(51) Int. Cl.: B65G 53/42, B65G 65/36, B65G 69/08

(54) **Entnahmevorrichtung für die Anordnung in einem Lager, Lager mit einer Entnahmevorrichtung sowie Verfahren zur Entnahme und Befüllung von Schüttgut**
Removal device for assembly in a warehouse, warehouse with a removal device and method of removing and filling bulk goods
Dispositif d'extraction pour l'agencement dans un stockage, stockage doté d'un dispositif d'extraction et procédé d'extraction et de remplissage de produits en vrac

(30) Priorität: 07.10.2009 DE 102009048569
(43) Veröffentlichungstag der Anmeldung: 13.04.2011
(73) Patentinhaber: Schellinger, Helmut, 88250 Weingarten (DE)
(72) Erfinder: Schellinger, Helmut, 88250 Weingarten (DE)
(74) Vertreter: Dobler, Markus

(56) Entgegenhaltungen:
- EP-A2- 1 580 133
- DE-A1-102006 061 810
- DE-B3-102007 048 123
- DE-U1- 29 612 185

## Beschreibung

Die Erfindung betrifft eine Entnahmevorrichtung für die Anordnung in einem Lager für Schüttgut nach dem Oberbegriff des Anspruchs 1, ein Lager mit einer Entnahmevorrichtung nach dem Oberbegriff des Anspruchs 6 sowie ein Verfahren zur Entnahme von Schüttgut nach dem Oberbegriff des Anspruchs 10.

### Stand der Technik:

Aus der deutschen Offenlegungsschrift DE 102 40 753 ist ein Lager für Schüttgut mit einem im Wesentlichen abgeschlossenen Lagerraum bekannt, in dem eine Entnahmevorrichtung zum Entnehmen des Schüttguts angeordnet ist. Die Entnahmevorrichtung umfasst eine bewegbare, wenigstens abschnittsweise flexible Förderanordnung mit einem Entnahmekopf und innerhalb des Lagerraums angeordnete Verfahrmittel. Durch die Verfahrmittel ist der Entnahmekopf in die Lage versetzt, selbsttätig zumindest einen Großteil der Grundfläche des Lagerraums durch eine Bewegung mit veränderbarer Kurvenform und/oder eine lineare Bewegung abzuwandern.

Aus den Entgegenhaltungen EP 1 580 133 A2 sowie DE 296 12 185 U1 sind Hebevorrichtung außerhalb eines Lagerraums für Schüttgut gezeigt, wobei eine pneumatische Antriebseinheit in der EP 1 580 133 A2 und eine Gewichtshebeeinheit in der DE 296 12 185 U1 offenbart ist.

### Aufgabe und Vorteile der Erfindung:

Der Erfindung liegt die Aufgabe zugrunde, die Effektivität eines Lagers mit Schüttgut zu verbessern.

Diese Aufgabe wird durch die Merkmale 1, 6 sowie 10 gelöst.

In den abhängigen Ansprüchen sind vorteilhafte und zweckmäßige Weiterbildungen der Erfindung angegeben.

Zunächst geht die Erfindung von einer Entnahmevorrichtung für die Anordnung in einem Lager für Schüttgut, insbesondere Holzpellets, mit einem im Wesentlichen abgeschlossenen Lagerraum aus. Die Entnahmevorrichtung umfasst eine bewegbare, wenigstens abschnittsweise flexible Förderrohranordnung mit einem Entnahmekopf. Die Förderrohranordnung ist vorzugsweise für eine Anbringung an einer Wanddurchführung des Lagerraums ausgelegt. Dabei kann bei einer festen Wand eine Befestigung über die Durchführung unmittelbar an der Wand erfolgen. Bei einer flexiblen Wand ist eine Befestigung an zusätzlichen Stützkonstruktionen denkbar. Der Kern der Erfindung liegt nun darin, dass Hebemittel mit einer elektromotorischen Antriebseinheit für eine Montage innerhalb des Lagerraums vorgesehen sind, durch welche der Entnahmekopf in einem montierten Zustand in einem Lagerraum vertikal anhebbar und auf die Oberfläche des Schüttguts absenkbar ist. Hierdurch kann z. B. vor einem erneuten Befüllen des Lagerraums der Entnahmekopf in eine Parkposition in einem Deckenbereich des Lagers hochgezogen werden, um nach dem Befüllen den Entnahmekopf auf der Oberfläche des Schüttguts wieder abzusenken, damit über den Entnahmekopf ein Entnahmevorgang gestartet werden kann.

Außerdem ist denkbar, während der Entleerung des Lagerraums den Entnahmekopf immer wieder anzuheben, um ihn erneut auf dem Schüttgut abzusetzen. Durch einen sich wiederholenden "Positions-Reset" lässt sich eine besonders gleichmäßige Entleerung eines Lagerraums erreichen. Je nachdem, wie die Hebemittel ausgestaltet sind, kann der Absetzpunkt das Zentrum des Lagerraums oder ein anderer vorgegebener Ort sein. Auf diese Weise kann eine Vergrößerung der sonst bearbeitbaren Grundfläche erreicht werden, indem Entnahme-Grundflächen durch entsprechendes Absetzen des Entnahmekopfs "patchwork"-artig zusammengesetzt werden. Die Möglichkeit eines automatisierten Anhebens des Entnahmekopfs ist jedoch auch in einem Störungsfall von Vorteil, um z. B. leicht an den Entnahmekopf heranzukommen.

Außerdem ist es bevorzugt, wenn die Entnahmevorrichtung Verfahrmittel umfasst, durch welche der Entnahmekopf in die Lage versetzt ist, selbsttätig zumindest einen Großteil der Grundfläche des Lagerraums bzw. des darauf befindlichen Schüttguts durch eine Bewegung mit veränderbarer Kurvenform und/oder eine lineare Bewegung abzuwandern. Die Verfahrmittel sind vorzugsweise so ausgelegt, den Entnahmekopf über eine Grundfläche zu bewegen, die wenigstens in einer Richtung um ein Vielfaches größer ist als der Wirkungsbereich des Entnahmekopfs an einer Stelle im Schüttgut ohne die Möglichkeit, verfahren zu können. Zum Beispiel ist im Entnahmekopf ein Antrieb integriert, der einen Fahrantrieb und/oder Bewegungsantrieb umfasst. Die Verfahrmittel sind vorzugsweise so ausgeführt, dass der Entnahmekopf einen "Random-Walk" ausführen kann. Damit ist der Entnahmekopf ohne größere Steuer- oder Regeleinrichtungen in der Lage, alle Punkte auf einer Grundfläche des Lagerraums oder auf einem Haufwerk im Lagerraum zu erreichen.

Die Verfahrmittel können dabei so ausgeführt werden, dass sich der Entnahmekopf mit zufällig ändernder Richtung so lange bewegt, bis er auf Schüttgut, z. B. Pellets, trifft.

In einer besonders bevorzugten Ausgestaltung der Erfindung umfassen die Hebemittel Zugmittel, die am Entnahmekopf und/oder an der nachfolgenden Förderrohranordnung angebracht sind. Vorzugsweise sind die Zugmittel unmittelbar am Entnahmekopf verankert, um den Entnahmekopf möglichst weit in einen Deckenbereich des Lagers ziehen zu können. Als Zugmittel kann z. B. ein Seil, ein Band oder eine Kette zum Einsatz kommen.

In einer weiteren, besonders bevorzugten Ausgestaltung der Erfindung sitzt die Antriebseinheit am Ende einer Führungsstruktur für die Zugmittel. Zum Beispiel ist ein verschwenkbarer "Galgen" im Deckenbereich des Lagers vorgesehen, an dessen vorderem Ende die Zugmittel in Richtung Entnahmekopf nach unten geführt sind. Denkbar ist jedoch auch eine feststehende Führungsstruktur, die an einen vorgegebenen Ort im Lager das Zugmittel führt, sodass es von dort aus zu einem Entnahmekopf weitergeführt werden kann.

Für eine sichere Führung des Zugmittels wird im Weiteren vorgeschlagen, die Zugmittel in einem horizontalen Abschnitt überwiegend in einem Rohr zu führen. Vorzugsweise erstreckt sich ein solches Rohr von einem Motor bis zu einem Austrittspunkt, an dem das Zugmittel dann in Richtung Entnahmekopf weiterläuft.

### Zeichnungen:

Weitere Ausführungsbeispiele der Erfindung sind in den Zeichnungen dargestellt und unter Angabe weiterer Vorteile und Einzelheiten nachstehend näher erläutert.

Es zeigen
- Fig. 1-4: jeweils in einer perspektivischen schematischen Seitenansicht erfindungsgemäße Holzpelletlager, bei denen zur besseren Darstellung des Innenraums eine ansonsten verdeckende Seitenwand abgenommen ist und
- Fig. 5: in einer perspektivischen schematischen Darstellung ein Holzpelletlager mit flexibler Hülle.

### Beschreibung der Ausführungsbeispiele:

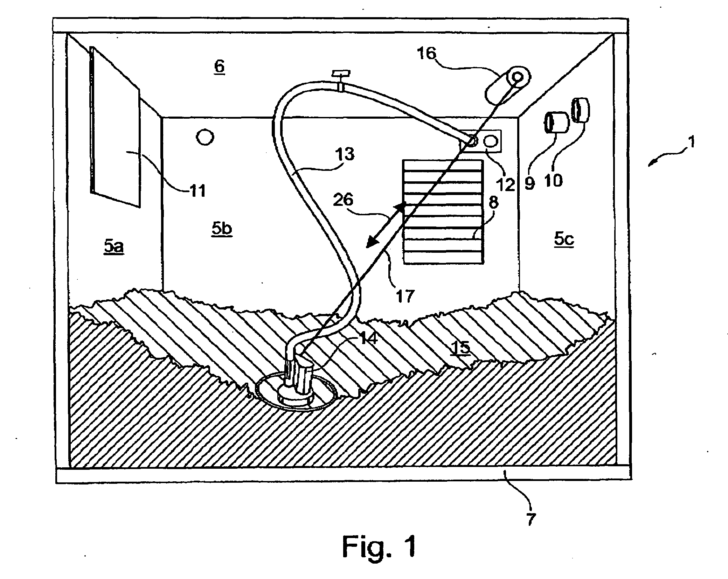

In den Figuren 1 bis 4 sind Holzpelletlager 1 bis 4 dargestellt, die jeweils feste Wände 5a, 5b, 5c sowie eine feste Decke 6 und einen festen Boden 7 besitzen. An der Wand 5b befindet sich ein Zugang 8. Im oberen Bereich der Wand 5c ist ein Befüllrohr 9 und ein Absaugrohr 10 angeordnet. Über das Befüllrohr 9 können z. B. Holzpellets eingeblasen werden. Um gewünschte Druckverhältnisse beim Einblasvorgang zu erhalten, ist es erforderlich, über das Absaugrohr 10 Luft abzusaugen.

Eingeblasene Holzpellets treffen auf eine flexible Prallfläche 11. Damit wird verhindert, dass die Holzpellets beim Einblasvorgang in unerwünschter Weise beschädigt werden, was einen hohen Staubanteil verursachen kann.

An der Wand 5b ist ein Durchgang 12 vorgesehen, an dessen Innenseite ein flexibles Saugrohr 13 befestigt ist. Am vorderen Ende des Saugrohrs 13 befindet sich ein Saugkopf 14. Am Saugkopf 14 ist ein Elektromotor untergebracht, der ein Fußelement in Drehung versetzt, sodass der Saugkopf 14 sich zufällig auf einer Oberfläche 15 eines Pellethaufwerks bzw. einem Boden 7 bewegen kann, um damit insbesondere kurz vor der Entleerung des Holzpelletlagers verbleibendes Schüttgut zu erreichen.

Ebenfalls übereinstimmend weisen alle Pelletlager 1, 2, 3, 4 eine Wickeleinheit 16 auf. Diese besteht aus einem Elektromotor und einer Trommel, auf welche ein Zugseil 17 auf-und abwickelbar ist. Das Zugseil 17 ist am Saugkopf 14 verankert.

Die Holzpelletlager 1, 2, 3, 4 unterscheiden sich in der Führung des Zugseils 17.

In Figur 1 läuft das Zugseil 17 ohne weitere Umlenkung direkt zur Wickeleinheit 16. Dadurch wird der Saugkopf beim Anheben schräg zur Seite gezogen.

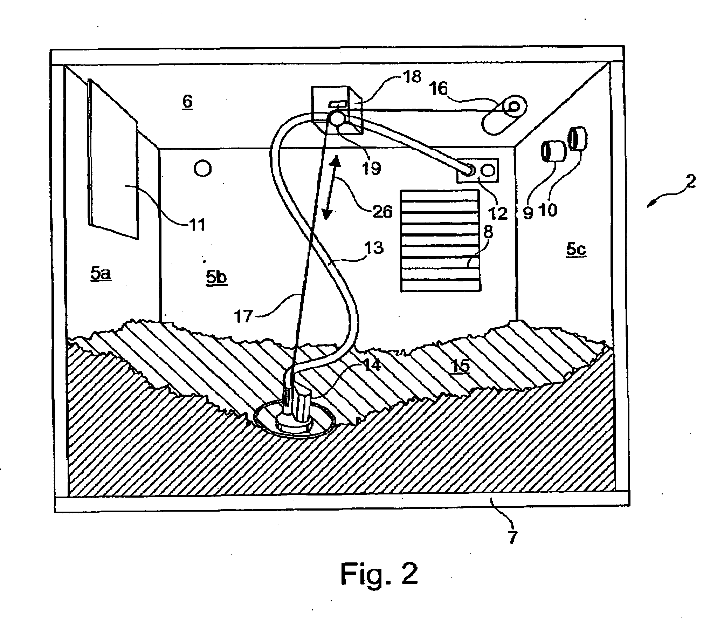

Beim Holzpelletlager 2 gemäß Figur 2 ist eine zentrale Umlenkeinrichtung 18 mit einer Umlenkrolle 19 vorgesehen, die z. B. einen Endschalter besitzt, der auslöst, wenn der Saugkopf 14 vollständig zur Umlenkeinrichtung 18 hochgezogen ist.

Die Umlenkeinrichtung 18 muss nicht zwangsläufig zentral an der Decke des Holzpelletlagers 2 angeordnet werden. Denkbar sind auch andere Positionen, die sich gegebenenfalls aus geometrischen Bedingungen des Holzpelletlagers ergeben.

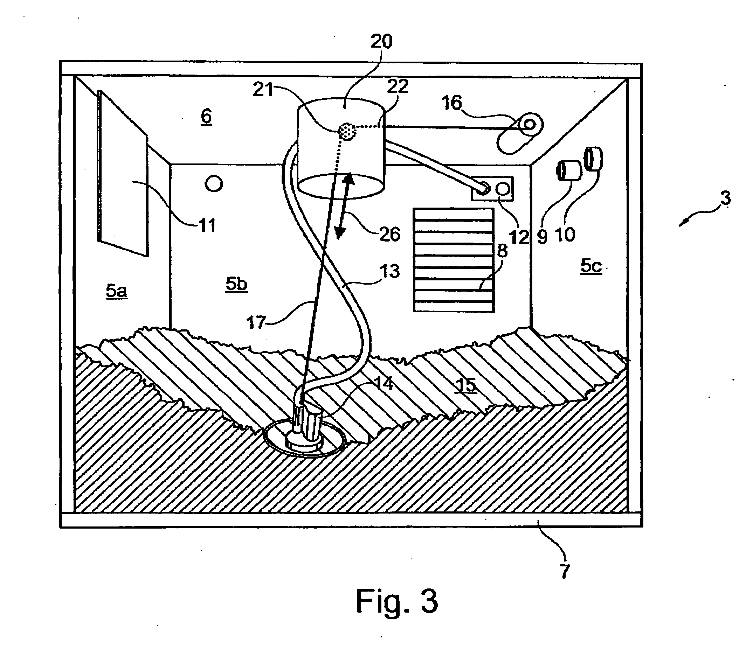

Im Holzpelletlager 3 nach Figur 3 ist ebenfalls, wie in Figur 2, eine zentrale Umlenkeinrichtung 20 mit Umlenkrolle 21 vorgesehen. Auch diese Umlenkeinrichtung 20 kann einen Endschalter aufweisen, um bei ausreichend hochgezogener Position des Saugkopfs ein automatisches Abschalten der Wickeleinheit 16 zu bewirken. Außerdem besitzt die Umlenkeinrichtung 20 ein Schutzgehäuse 22 für den Saugkopf 14. Damit ist der Saugkopf 14, insbesondere bei einem Befüllvorgang, vor umherfliegenden Holzpellets geschützt.

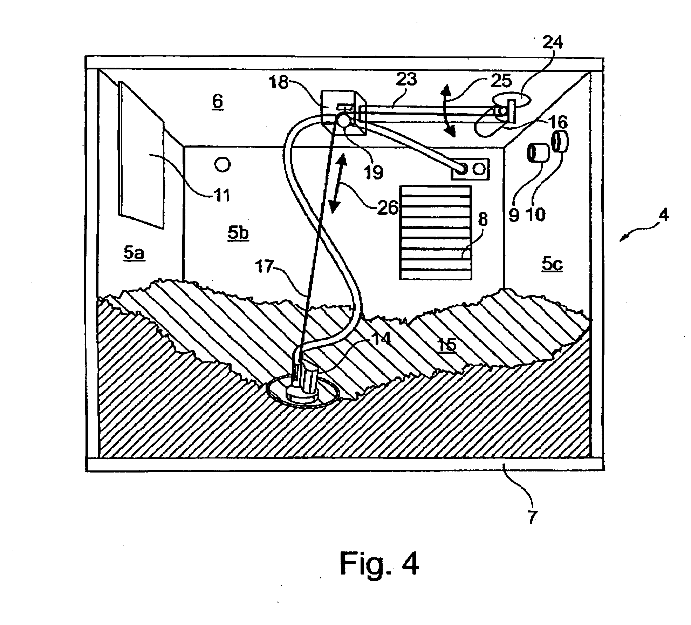

Bei der Ausführungsform gemäß Figur 4 ist die Umlenkeinrichtung 18 nicht, wie in Figur 2, fest an der Decke 6 montiert, sondern an einem schwenkbaren Ausleger 23, dessen der Umlenkeinrichtung 18 gegenüberliegendes Ende an einer Dreheinheit 24 befestigt ist. Das Zugseil 17 wird zunächst an der Rolle 19, die innerhalb der Umlenkeinheit 18 sitzt, umgelenkt und dann z. 3. innerhalb des Auslegers 23 und gegebenenfalls über eine weitere Umlenkstation zur Wickeleinheit 16 geführt.

Vor einem Befüllvorgang durch das Befüllrohr 9 kann die Umlenkeinrichtung 18 über den Ausleger 23 in einer Ebene parallel zur Decke 6 (durch Pfeil 25 verdeutlicht) zur Seite geschwenkt werden.

In allen Holzpelletlager-Ausführungsformen 1, 2, 3, 4 lässt sich der Saugkopf 14 über das Zugseil 17 anheben und wieder absenken, je nach Bedarf (durch Pfeil 26 verdeutlicht). Es ist auch ein teilweises Anheben denkbar.

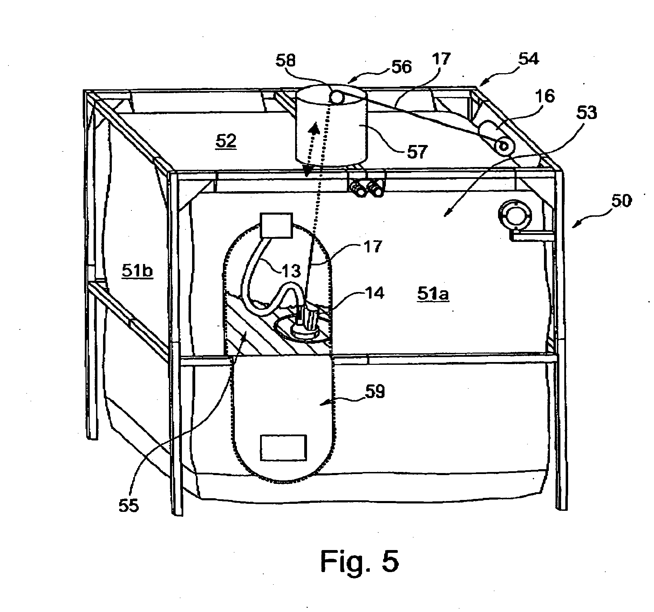

In Figur 5 ist eine Ausführungsform eines Pelletlagers 50 dargestellt, das flexible Wände 51a, 51b sowie eine flexible Decke 52 besitzt. Ein daraus entstehendes flexibles Behältnis 53 ist in einem Haltegestell 54 aufgehängt, damit es ungefähr in der Form eines Quaders bleibt, unabhängig von seinem Befüllgrad. Zur Entnahme von Holzpellets 55 ist, wie bei den Ausführungsformen gemäß der Figuren 1 bis 4, ein fest installiertes Saugrohr 13 sowie ein Saugkopf 14 am vorderen Ende des Saugrohrs 13 vorgesehen. Der Saugkopf 14 ist an einem Zugseil 17 befestigt, das zu einer Wickeleinheit 16 über eine Umlenkeinrichtung 56 geführt ist.

Die Umlenkeinrichtung 56 umfasst ein an die Decke 52 anschließendes Gehäuse 57 mit z. B. einer Umlenkrolle 58 für die Führung des Zugseils 17.

Für einen Befüllvorgang kann der Saugkopf 14 z. B. vollständig in das Gehäuse 57 gezogen werden, durch Betätigen der Wickeleinheit 16. Die Wickeleinheit 16 ist in der Ausführungsform gemäß Figur 5 außerhalb des flexiblen Behältnisses 53 angeordnet. Für eine feste Montage bietet sich z. B. das Haltegestell 54 an. Auch eine Montage innerhalb des Behältnisses 53 ist denkbar.

Die Decke 52 besitzt vorzugsweise einen staubdichten Durchgang zum Gehäuse 57, durch welchen der Saugkopf 14 in das Gehäuse 57 eintreten kann.

Des Weiteren ist in Figur 5 das flexible Behältnis 23 in einem geöffneten Zugang 59 dargestellt, der Einblick ins Innere des flexiblen Behältnisses 53 freigibt.

In einer Ruheposition im Gehäuse 57 wird der Saugkopf 14 vollständig außerhalb des Behältnisses 53 geparkt.

In allen Ausführungsformen gemäß der Figuren 1 bis 5 kann vor einem Befüllvorgang der Saugkopf 14 in eine maximale, nach oben gezogene Parkposition mittels der Wickeleinheit 16 gezogen werden.

Nach einem Befüllvorgang lässt sich der Saugkopf über die Wickeleinheit auf dem Haufwerk definiert absetzen.

Der ganze Vorgang kann auch voll automatisiert erfolgen durch eine Sensorik, die einen Befüllvorgang erkennt und eine entsprechende Steuereinrichtung zur Steuerung der Wickeleinheit 16.

Über eine entsprechende Steuereinrichtung kann auch während des Betriebs des Holzpelletlagers, d. h. mit stetig sinkendem Holzpellet-Füllgrad der Saugkopf immer wieder angehoben und definiert auf dem Haufwerk abgesetzt werden. Somit ist ein "Positions-Reset" möglich, wenn sich der Saugkopf in unerwünschter Weise z. B. an einer Stelle im Haufwerk vergraben hat.

Damit wird eine homogene Entleerung des Holzpelletlagers begünstigt.

### Bezugszeichenliste:

- 1: Holzpelletlager
- 2: Holzpelletlager
- 3: Holzpelletlager
- 4: Holzpelletlager
- 5a: Wand
- 5b: Wand
- 5c: Wand
- 6: Decke
- 7: Boden
- 8: Zugang
- 9: Befüllrohr
- 10: Absaugrohr
- 11: Prallelement
- 12: Durchgang
- 13: Saugrohr
- 14: Saugkopf
- 15: Oberfläche
- 16: Wickeleinheit
- 17: Zugseil
- 18: Umlenkeinrichtung
- 19: Umlenkrolle
- 20: Umlenkeinrichtung
- 21: Umlenkrolle
- 22: Gehäuse
- 23: Ausleger
- 24: Dreheinheit
- 25: Pfeil
- 26: Pfeil
- 50: Holzpelletlager
- 51a: Wand
- 51b: Wand
- 52: Decke
- 53: flexibles Behältnis
- 54: Haltegestell
- 55: Holzpellets
- 56: Umlenkeinrichtung
- 57: Gehäuse
- 58: Umlenkrolle
- 59: Zugang

## Patentansprüche

1. Entnahmevorrichtung für die Anordnung in einem Lager für Schüttgut, insbesondere Holzpellets, mit einem im Wesentlichen abgeschlossenen Lagerraum mit einer bewegbaren, wenigstens abschnittsweise flexiblen Förderrohranordnung (13, 14) mit einem Entnahmekopf (14), **dadurch gekennzeichnet, dass** Hebemittel (16-24, 56, 57) mit einer elektromotorischen Antriebseinheit für eine Montage innerhalb des Lagerraums vorgesehen sind, durch welche in einem montierten Zustand im Lagerraum der Entnahmekopf (14) anhebbar und auf die Oberfläche des Schüttguts absenkbar ist.

2. Entnahmevorrichtung nach Anspruch 1, **dadurch gekennzeichnet, dass** die Hebemittel (16-24, 56, 57) Zugmittel (17) umfassen, die am Entnahmekopf (14) und/oder an der nachfolgenden Förderrohranordnung (13) angebracht sind.

3. Entnahmevorrichtung nach einem der vorhergehenden Ansprüche, **dadurch gekennzeichnet, dass** die Antriebseinheit am Ende einer Führungsstruktur (23, 24) für die Zugmittel (17) sitzt.

4. Entnahmevorrichtung nach einem der vorhergehenden Ansprüche, **dadurch gekennzeichnet, dass** die Zugmittel (17) an einem horizontalen Abschnitt überwiegend in einem Rohr geführt sind.

5. Lager mit einer Entnahmevorrichtung nach einem der vorhergehenden Ansprüche.

6. Lager nach Anspruch 6, **dadurch gekennzeichnet, dass** die Antriebseinheit im oberen Drittel des Lagers angeordnet ist.

7. Verfahren zur Entnahme und Befüllung von Schüttgut aus einem Lagerraum mit einer innerhalb des Lagerraums installierten Entnahmevorrichtung, die eine bewegbare, wenigstens abschnittsweise flexible Förderrohranordnung (13) mit einem Entnahmekopf (14) umfasst, wobei der Lagerraum entleert und anschließend befüllt wird, **dadurch gekennzeichnet, dass** der Entnahmekopf (14) mit der elektromotorisaten einer Antriebseinheit innerhalb des Lagerraums vor jedem Befüllvorgang in eine Parkposition in einen Deckenbereich des Lagers gezogen wird, um nach dem Befüllen den Entnahmekopf auf der Oberfläche des Schüttguts wieder absenken zu können.

8. Verfahren nach Anspruch 7, **dadurch gekennzeichnet, dass** der Entnahmekopf (14) in vorgegebenen Zeitabständen in eine Position über dem Schüttgut gezogen und anschließend wieder abgesenkt wird.

9. Verfahren nach Anspruch 7 oder 8, **dadurch gekennzeichnet, dass** der Entnahmekopf (14) in Abhängigkeit von der Befüllungssituation des Lagerraums in eine Position über das Schüttgut gezogen und anschließend wieder abgesenkt wird.

## Claims

1. Removal device for arranging in a storeroom for bulk material, in particular wood pellets, comprising an essentially closed storage room with a movable at least partly flexible conveying pipe arrangement with a removal head (14), **characterised in that** lifting means (16-24, 56, 57) are provided with an electric motor drive unit for assembly inside the storage room, by means of which in an assembled state in the storage room the removal head (14) can be raised and lowered to the surface of the bulk material.

2. Removal device according to claim 1, **characterised in that** the lifting means (16-24, 56, 57) comprise pulling means (17) which are attached to the removal head (14) and/or to the subsequent conveying pipe arrangement (13).

3. Removal device according to any of the preceding claims, **characterised in that** the drive unit is positioned at the end of a guiding structure (23, 24) for the pulling means (17).

4. Removal device according to any of the preceding claims, **characterised in that** the pulling means (17) are guided on a horizontal section mainly in a pipe.

5. Storeroom comprising a removal device according to any of the preceding claims.

6. Storeroom according to claim 6, **characterised in that** the drive unit is arranged in the upper third of the storeroom.

7. Method for removing and filling bulk material from a storage room comprising a removal device installed inside the storeroom, which comprises a movable at least partly flexible conveying pipe arrangement (13) with a removal head (14), wherein the storage room is emptied and subsequently filled, **characterised in that** the removal head (14) is pulled by the electric motor drive unit inside the storeroom prior to each filling process into a parking position in a ceiling area of the storeroom, in order after filling to enable the lowering of the removal head back onto the surface of the bulk material.

8. Method according to claim 7, **characterised in that** the removal head (14) is pulled at predefined time intervals into a position above the bulk material and then lowered again.

9. Method according to claim 7 or 8, **characterised in that** the removal head (14) depending on the filling position of the storage room is pulled into a position above the bulk material and then lowered again.

## Revendications

1. Dispositif d'extraction destiné à être placé dans une réserve pour matière en vrac, notamment des granulés de bois, avec un local de stockage sensiblement clos, avec un assemblage de tube d'acheminement (13, 14) mobile et flexible au moins par tronçons avec une tête de prélèvement (14), **caractérisé en ce que** sont prévus des moyens de levage (16-24, 56, 57) avec une unité d'entraînement électromotrice pour un montage à l'intérieur du local de stockage, à l'aide desquels, dans un état monté à l'intérieur du local de stockage, la tête de prélèvement (14) peut être soulevée et baissée sur la surface de la matière en vrac.

2. Dispositif de prélèvement selon la revendication 1, **caractérisé en ce que** les moyens de levage (16-24, 56, 57) comprennent des moyens de traction (17) qui sont montés sur la tête de prélèvement (14) et/ou sur l'assemblage de tube de prélèvement (13) qui y fait suite.

3. Dispositif de prélèvement selon l'une des revendications précédentes, **caractérisé en ce que** l'unité d'entraînement est placée à l'extrémité d'une structure de guidage (23, 24) pour les moyens de traction (17).

4. Dispositif de prélèvement selon l'une des revendications précédentes, **caractérisé en ce que** les moyens de traction (17) sont guidés en grande partie dans un tube sur une section horizontale.

5. Réserve avec un dispositif de prélèvement selon l'une des revendications précédentes.

6. Réserve selon la revendication 5, **caractérisé en ce que** l'unité d'entraînement est disposée dans le tiers supérieur de la réserve.

7. Procédé de prélèvement et de remplissage de matières en vrac dans un local de stockage avec un dispositif de prélèvement installé dans le local de stockage et qui comprend un assemblage de tube de prélèvement (13) mobile et flexible au moins par tronçons, le local de stockage étant vidé puis rempli, **caractérisé en ce que** la tête de prélèvement (14) est tirée dans une position de repos située dans une zone du plafond de la réserve à l'intérieur de l'espace de stockage avec l'unité d'entraînement électromotrice avant chaque procédure de remplissage, afin de pouvoir après le remplissage abaisser à nouveau la tête de prélèvement sur la surface de la matière en vrac.

8. Procédé selon la revendication 7, **caractérisé en ce que** la tête de prélèvement (14) est tirée à intervalles de temps prédéfinis dans une position au-dessus de la matière en vrac et elle est ensuite abaissée à nouveau.

9. Procédé selon la revendication 7 ou 8, **caractérisé en ce que**, en fonction de la situation de remplissage du local de stockage, la tête de prélèvement (14) est tirée dans une position située au-dessus de la matière en vrac et elle est ensuite abaissée à nouveau.
